# EUROPEAN PATENT APPLICATION

(11) **EP 3 979 473 A1**
(43) Date of publication of application: **06.04.2022**
(21) Application number: 19930472.6
(22) Date of filing: 24.05.2019
(51) Int. Cl.: H02K 15/03, H02K 1/27

(54) **METHOD FOR MANUFACTURING ELECTRIC MOTOR, ELECTRIC MOTOR, COMPRESSOR, AND AIR CONDITIONER**

(71) Applicant: MITSUBISHI ELECTRIC CORPORATION, Chiyoda-ku Tokyo 100-8310 (JP)
(72) Inventor: MASUKO, Tomoki, Tokyo 100-8310 (JP); MATSUOKA, Atsushi, Tokyo 100-8310 (JP)
(74) Representative: Pfenning, Meinig & Partner mbB
(86) International application number: PCT/JP2019/020673
(87) International publication number: WO 2020/240617

(57) **Abstract**

A method for producing an electric motor (1) includes: connecting a first phase coil of three-phase coils (32) to a positive side of a source of electrical power for magnetizing; passing an electric current through the three-phase coils (32) in a state where a center of a magnetic pole of a rotor (2) is rotated a first angle (θ1) with respect to a center of a magnetic pole of the first phase coil; switching a connection with the positive side of the source of electrical power from the first phase coil to a second phase coil; and passing an electric current through the three-phase coils (32) in a state where the center of the magnetic pole of the rotor (2) is rotated a second angle (θ2) with respect to a center of a magnetic pole of the second phase coil.

## Description

### TECHNICAL FIELD

The present invention relates to an electric motor and a method for producing an electric motor.

### BACKGROUND ART

In a known magnetization technique, permanent magnets (specifically, unmagnetized magnetic materials) of a rotor are magnetized by using coils (also referred to as winding) attached to a stator core in general (see, for example, Patent Reference 1).

### PRIOR ART REFERENCE

### PATENT REFERENCE

Patent Reference 1: Japanese Patent Application Publication No. 2015-91192

### SUMMARY OF THE INVENTION

### PROBLEM TO BE SOLVED BY THE INVENTION

In a conventional technique, however, when an electric current flows from a source of electrical power for magnetizing to coils, a large force is generated in the coils, and ends of the coils in the axial direction of an electric motor, that is, a coil end, is deformed.

It is therefore an object of the present invention to prevent significant deformation of three-phase coils of a stator in performing magnetization with a rotor disposed inside the stator.

### MEANS OF SOLVING THE PROBLEM

A method for producing an electric motor according to an aspect of the present invention is a method for producing an electric motor including a stator and a rotor having a magnetic pole, the stator having a stator core and three-phase coils attached to the stator core by distributed winding, the rotor being disposed inside the stator, and the method includes:
disposing the rotor inside the stator, the rotor having a magnetic material that is not magnetized;
connecting a first phase coil of the three-phase coils to a positive side of a source of electrical power for magnetizing;
passing an electric current through the three-phase coils in a state where a center of the magnetic pole of the rotor is rotated a first angle with respect to a center of a magnetic pole of the first phase coil in a first rotation direction of the rotor, the magnetic pole of the first phase coil being formed when the electric current flows through the first phase coil from the source of electrical power;
switching a connection with the positive side of the source of electrical power from the first phase coil to a second phase coil of the three-phase coils; and
passing an electric current through the three-phase coils in a state where the center of the magnetic pole of the rotor is rotated a second angle with respect to a center of a magnetic pole of the second phase coil in a second rotation direction, the magnetic pole of the second phase coil being formed when the electric current flows through the second phase coil from the source of electrical power, the second rotation direction being an opposite direction to the first rotation direction of the rotor.

An electric motor according to another aspect of the present invention includes:
a stator having a stator core and three-phase coils, the three-phase coils being attached to the stator core by distributed winding; and
a rotor having a magnetic pole and disposed inside the stator, wherein
the rotor includes
a stator core, and
a permanent magnet disposed in the stator core,
in a plane orthogonal to an axial direction of the rotor, one end side of the permanent magnet is magnetized by passing an electric current through the three-phase coils in a state where a center of the magnetic pole of the rotor is rotated a first angle with respect to a center of a magnetic pole of a first phase coil of the three-phase coils in a first rotation direction of the rotor, the magnetic pole of the first phase coil being formed when the electric current flows through the first phase coil from a source of electrical power for magnetizing, and
in the plane orthogonal to the axial direction of the rotor, another end side of the permanent magnet is magnetized by passing an electric current through the three-phase coils in a state where the center of the magnetic pole of the rotor is rotated a second angle with respect to a center of a magnetic pole of a second phase coil of the three-phase coils in a second rotation direction of the rotor, the magnetic pole of the second phase coil being formed when the electric current flows through the second phase coil from the source of electrical power, the second rotation direction being an opposite direction to the first rotation direction of the rotor.

A compressor according to yet another aspect of the present invention includes:
a closed container;
a compression device disposed in the closed container; and
the electric motor to drive the compression device.

An air conditioner according to still another aspect of the present invention includes:
the compressor; and
a heat exchanger.

### EFFECTS OF THE INVENTION

The present invention can prevent significant deformation of three-phase coils of a stator in performing magnetization with a rotor disposed inside the stator.

### BRIEF DESCRIPTION OF THE DRAWINGS

FIG. 1 is a plan view schematically illustrating a configuration of an electric motor according to a first embodiment of the present invention.
FIG. 2 is a plan view schematically illustrating a configuration of a rotor.
FIG. 3 is a plan view illustrating an example of a stator.
FIG. 4 is a plan view schematically illustrating an internal configuration of the stator illustrated in FIG. 3.
FIG. 5 is a schematic diagram illustrating an example of connection in three-phase coils.
FIG. 6 is a diagram illustrating an example of a connection pattern of the three-phase coils in magnetization of a magnetic material.
FIG. 7 is a diagram illustrating another example of the connection pattern of the three-phase coils in magnetization of the magnetic material.
FIG. 8 is a diagram illustrating yet another example of the connection pattern of the three-phase coils in magnetization of the magnetic material.
FIG. 9 is a diagram illustrating still another example of the connection pattern of the three-phase coils in magnetization of the magnetic material.
FIG. 10 is a diagram illustrating still another example of the connection pattern of the three-phase coils in magnetization of the magnetic material.
FIG. 11 is a diagram illustrating still another example of the connection pattern of the three-phase coils in magnetization of the magnetic material.
FIG. 12 is a flowchart depicting an example of a process of producing an electric motor.
FIG. 13 is a diagram illustrating an example of a process for producing an electric motor.
FIG. 14 is a diagram illustrating an example of the process for producing the electric motor.
FIG. 15 is a diagram illustrating an example of the process for producing the electric motor.
FIG. 16 is a diagram illustrating another example of the stator.
FIG. 17 is a diagram illustrating a magnetization process in an electric motor as a comparative example.
FIG. 18 is a diagram illustrating an example of an electromagnetic force in a radial direction occurring in coil ends of three-phase coils when the three-phase coils are energized in a process for producing an electric motor.
FIG. 19 is a diagram illustrating an example of an electromagnetic force in an axial direction occurring in the coil ends of the three-phase coils when the three-phase coils are energized in the process for producing an electric motor.
FIG. 20 is a graph showing a difference in magnitude of electromagnetic forces in the radial direction among connection patterns in the three-phase coils when the three-phase coils are energized in a magnetization process of a magnetic material.
FIG. 21 is a graph showing a difference in magnitude of electromagnetic forces in the axial direction among connection patterns in the three-phase coils when the three-phase coils are energized in the magnetization process of a magnetic material.
FIG. 22 is a graph showing a relationship between an angle [degree] with respect to a reference position and an electric current value [kAT] from a source of electrical power for magnetizing.
FIG. 23 is a graph showing a difference in magnitude of electromagnetic forces in the radial direction among connection patterns in the three-phase coils when the three-phase coils are energized in the magnetization process of a magnetic material.
FIG. 24 is a graph showing a difference in magnitude of electromagnetic forces in the axial direction among connection patterns in the three-phase coils when the three-phase coils are energized in the magnetization process of a magnetic material.
FIG. 25 is a graph showing a relationship between an angle [degree] with respect to a reference position and an electric current value [kAT] from a source of electrical power for magnetizing.
FIG. 26 is a graph showing a difference in magnitude of electromagnetic forces in the radial direction among connection patterns in the three-phase coils when the three-phase coils are energized in the magnetization process of a magnetic material.
FIG. 27 is a graph showing a difference in magnitude of electromagnetic forces in the axial direction among connection patterns in the three-phase coils when the three-phase coils are energized in the magnetization process of a magnetic material.
FIG. 28 is a graph showing a difference in magnitude of electromagnetic forces in the radial direction among connection patterns in the three-phase coils when the three-phase coils are energized in the magnetization process of a magnetic material.
FIG. 29 is a graph showing a difference in magnitude of electromagnetic forces in the axial direction among connection patterns in the three-phase coils when the three-phase coils are energized in the magnetization process of a magnetic material.
FIG. 30 is a cross-sectional view schematically illustrating a configuration of a compressor according to a second embodiment of the present invention.
FIG. 31 is a diagram schematically illustrating a configuration of a refrigeration air conditioning apparatus according to a third embodiment of the present invention.

### MODE FOR CARRYING OUT THE INVENTION

### FIRST EMBODIMENT

In xyz orthogonal coordinate systems illustrated in the drawings, a z-axis direction (z axis) represents a direction parallel to an axis line Ax of an electric motor rotor 1, an x-axis direction (x axis) represents a direction orthogonal to the z-axis direction (z axis), and a y-axis direction (y axis) represents a direction orthogonal to both the z-axis direction and the x-axis direction. The axis line Ax is a center of a stator 3, that is, a rotation center of a rotor 2. A direction parallel to the axis line Ax will be referred to as an "axial direction of the rotor 2" or simply as an "axial direction." A radial direction refers to a direction of a radius of the rotor 2 or the stator 3, and is a direction orthogonal to the axis line Ax. An xy plane is a plane orthogonal to the axial direction. An arrow D1 represents a circumferential direction about the axis line Ax. The circumferential direction of the rotor 2 or the stator 3 will be referred to simply as a "circumferential direction."

### <Configuration of Electric Motor 1>

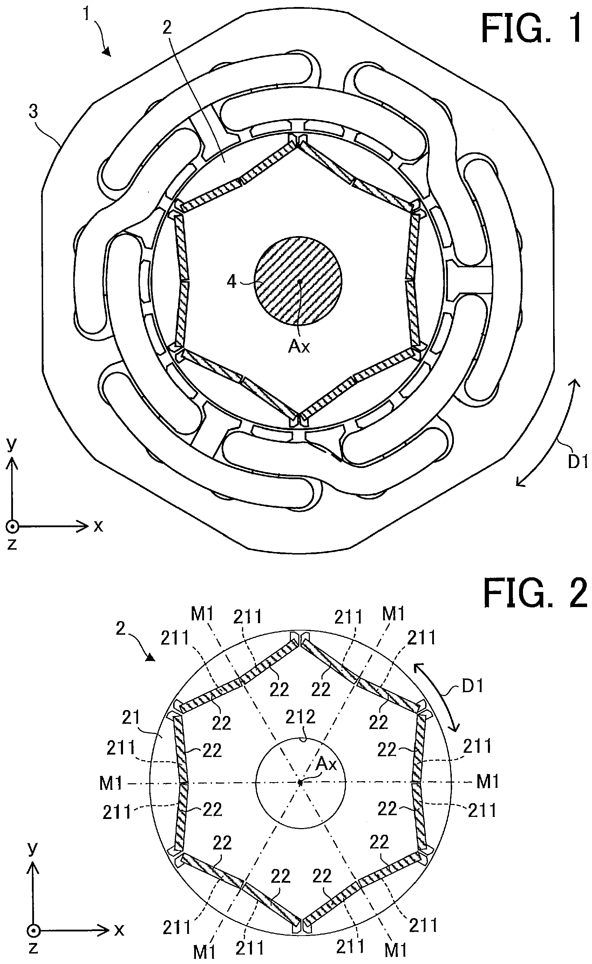

FIG. 1 is a plan view schematically illustrating a configuration of the electric motor 1 according to the first embodiment of the present invention.

The electric motor 1 includes the rotor 2 having a plurality of magnetic poles, the stator 3, and a shaft 4 fixed to the rotor 2. The electric motor 1 is, for example, a permanent magnet synchronous motor.

FIG. 2 is a plan view schematically illustrating a configuration of the rotor 2.

The rotor 2 is rotatably disposed inside the stator 3. The rotor 2 includes a rotor core 21 and at least one permanent magnet 22 that is a magnetic material. An air gap is present between the rotor 2 and the stator 3. The rotor 2 rotates about the axis line Ax.

The rotor core 21 includes a plurality of magnet insertion holes 211 and a shaft hole 212. The rotor core 21 may further include at least one flux barrier that is space communicating with the magnet insertion holes 211.

In this embodiment, the rotor 2 includes a plurality of permanent magnets 22. The permanent magnets 22 are individually disposed in the magnet insertion holes 211. The shaft 4 is fixed to the shaft hole 212.

Each of the permanent magnets 22 included in the electric motor 1 as a finished product is a magnetized magnetic material 22. In this embodiment, two adjacent permanent magnets 22 form one magnetic pole, that is, a north pole or a south pole, of the rotor 2. It should be noted that one permanent magnet 22 may form one magnetic pole of the rotor 2.

In this embodiment, in the xy plane, a pair of permanent magnets 22 forming one magnetic pole of the rotor 2 is disposed to have a V shape. It should be noted that in the xy plane, one pair of permanent magnets 22 forming one magnetic pole of the rotor 2 may be disposed to be straight.

The center of each magnetic pole of the rotor 2 is located at the center of each magnetic pole of the rotor 2 (i.e., a north pole or a south pole of the rotor 2). Each of the magnetic poles (also referred to simply as "each magnetic pole" or a "magnetic pole") of the rotor 2 means a region serving as a north pole or a south pole of the rotor 2.

The center of each magnetic pole of the rotor 2 is indicated by a magnetic pole center line M1. In the example illustrated in FIG. 2, the magnetic pole center line M1 passes between two permanent magnets 22 forming one magnetic pole of the rotor 2 and through the axis line Ax in the xy plane. That is, in the example illustrated in FIG. 2, the center of each magnetic pole of the rotor 2 includes a position between two permanent magnets 22 forming one magnetic pole.

In the case where one permanent magnet 22 forms one magnetic pole of the rotor 2, the center of each magnetic pole of the rotor 2 includes the center of one permanent magnet 22 in the xy plane. In this case, in the xy plane, the magnetic pole center line M1 passes through the center of each permanent magnet 22 and the axis line Ax.

### <Configuration of Stator 3>

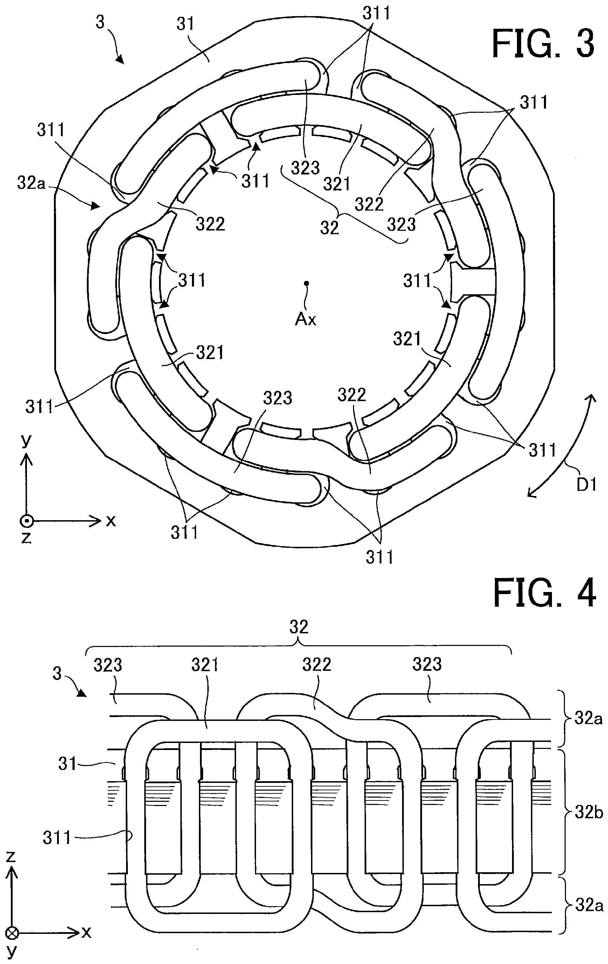

FIG. 3 is a plan view illustrating an example of the stator 3.

FIG. 4 is a plan view schematically illustrating an internal configuration of the stator 3 illustrated in FIG. 3.

The stator 3 includes a stator core 31 and three-phase coils 32.

The stator core 31 includes a plurality of slots 311 in which the three-phase coils 32 are disposed. In the example illustrated in FIG. 3, the stator core 31 includes eighteen slots 311.

The three-phase coils 32 are wound around the stator core 31 by distributed winding. As illustrated in FIG. 4, the three-phase coils 32 include coil sides 32b disposed in the slots 311 and coil ends 32a not disposed in the slots 311. The coil ends 32a are end portions of the three-phase coils 32 in the axial direction.

The three-phase coils 32 include at least one internal phase coil 321, at least one intermediate phase coil 322, and at least one external phase coil 323. That is, the three-phase coils 32 have a first phase, a second phase, and a third phase. For example, the first phase is a V phase, the second phase is a W phase, and the third phase is a U phase. In this embodiment, when an electric current flows through the three-phase coils 32, the three-phase coils 32 form six magnetic poles.

In the example illustrated in FIG. 3, the three-phase coils 32 have three internal phase coils 321, three intermediate phase coils 322, and three external phase coils 323. The number of coils of each phase is not limited to three. In this embodiment, the stator 3 has the configuration illustrated in FIG. 3 at two coil ends 32a. It should be noted that the stator 3 only needs to have the configuration illustrated in FIG. 3 at one of the two coil ends 32a.

In the coil ends 32a of the three-phase coils 32, the first phase coil, the second phase coil, and the third phase coil in each set of the three-phase coils 32 are arranged in this order in the circumferential direction of the stator core 31. In the example illustrated in FIG. 3, in the coil ends 32a of the three-phase coils 32, the intermediate phase coil 322, the internal phase coil 321, and the external phase coil 323 in each set of the three-phase coils 32 are arranged in this order in the circumferential direction of the stator core 31. In the coil ends 32a, coils of the individual phases are arranged at regular intervals in the circumferential direction. The coil of any one of the phases is disposed in one slot 311. Accordingly, magnetic flux of the permanent magnets 22 of the rotor 2 can be effectively used.

As illustrated in FIG. 3, in the coil ends 32a of the three-phase coils 32, the internal phase coils 321 are located closer to the center of the stator core 31 than the external phase coils 323 are. In this case, for example, the first phase coils are the intermediate phase coils 322, the second phase coils are the internal phase coils 321, and the third phase coils are the external phase coils 323.

It should be noted that in the coil ends 32a of the three-phase coils 32, the second phase coil, the first phase coil, and the third phase coil in each set may be arranged in this order in the circumferential direction of the stator core 31. In this case, in the coil ends 32a, the first phase coils are located closer to the center of the stator core 31 than the third phase coils are.

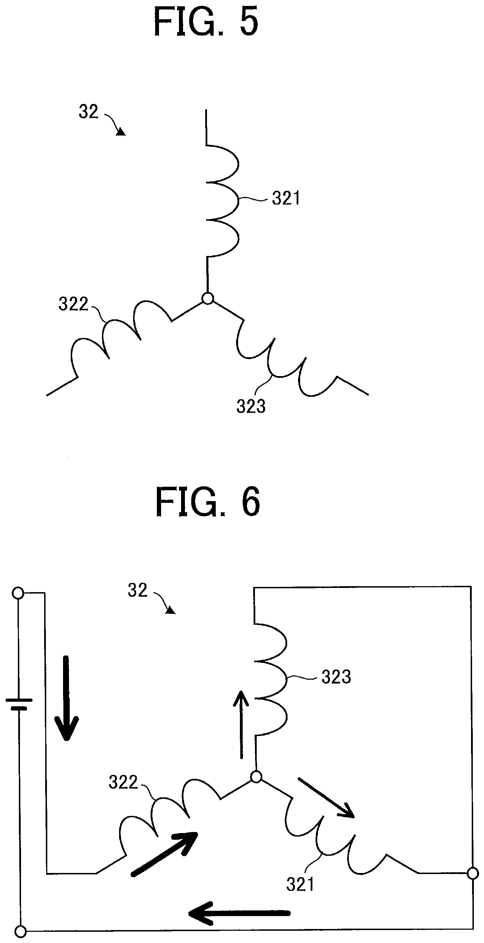

FIG. 5 is a schematic diagram illustrating an example of connection in the three-phase coils 32.

A connection in the three-phase coils 32 is, for example, Y-connection. In other words, the three-phase coils 32 are connected by, for example, Y-connection. In this case, the internal phase coil 321, the intermediate phase coil 322, and the external phase coil 323 are connected by Y-connection.

FIGS. 6 through 11 are diagrams illustrating examples of a connection pattern of the three-phase coils 32 in magnetizing an unmagnetized magnetic material 22 by using the stator 3. In other words, FIGS. 6 through 11 are diagrams illustrating an example of a connection state between the three-phase coils 32 connected by Y-connection and a source of electrical power for magnetizing. Arrows in FIGS. 6 through 11 represent directions of electric currents. The source of electrical power for magnetizing will also be referred to simply as a "source of electrical power." In this embodiment, the source of electrical power is a direct current power source.

In the example illustrated in FIG. 6, a positive side of the source of electrical power (i.e., a positive pole side of the source of electrical power) is connected to the intermediate phase coil 322, and a negative side of the source of electrical power (i.e., a negative pole side of the source of electrical power) is connected to the internal phase coil 321 and the external phase coil 323. The connection state illustrated in FIG. 6 will be referred to as a connection pattern P1. In this case, a large electric current flows from the source of electrical power to the intermediate phase coil 322. The electric current flowing from the source of electrical power to the intermediate phase coil 322 is divided into an electric current flowing through the internal phase coil 321 and an electric current flowing through the external phase coil 323. Thus, the electric current flowing through the intermediate phase coil 322 is larger than each of the electric current flowing through the internal phase coil 321 and the electric current flowing through the external phase coil 323.

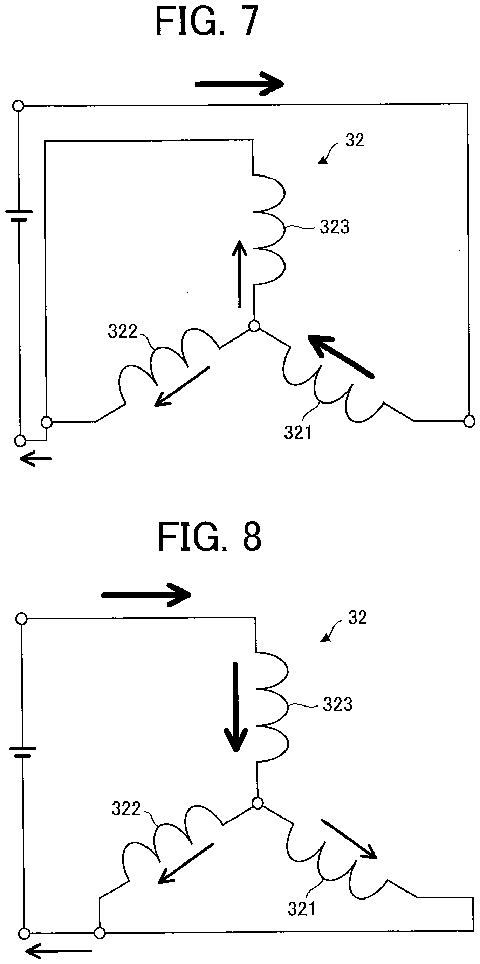

In the example illustrated in FIG. 7, the positive side of the source of electrical power is connected to the internal phase coil 321, and the negative side of the source of electrical power is connected to the intermediate phase coil 322 and the external phase coil 323. The connection state illustrated in FIG. 7 will be referred to as a connection pattern P2. In this case, a large electric current flows from the source of electrical power to the internal phase coil 321. The electric current flowing from the source of electrical power to the internal phase coil 321 is divided into the electric current flowing through the intermediate phase coil 322 and the electric current flowing through the external phase coil 323. Thus, the electric current flowing through the internal phase coil 321 is larger than each of the electric current flowing through the intermediate phase coil 322 and the electric current flowing through the external phase coil 323.

In the example illustrated in FIG. 8, the positive side of the source of electrical power is connected to the external phase coil 323, and the negative side of the source of electrical power is connected to the internal phase coil 321 and the intermediate phase coil 322. The connection state illustrated in FIG. 8 will be referred to as a connection pattern P3. In this case, a large electric current flows from the source of electrical power to the external phase coil 323. The electric current flowing from the source of electrical power to the external phase coil 323 is divided into an electric current flowing through the internal phase coil 321 and an electric current flowing through the intermediate phase coil 322. Thus, the electric current flowing through the external phase coil 323 is larger than each of the electric current flowing through the internal phase coil 321 and the electric current flowing through the intermediate phase coil 322.

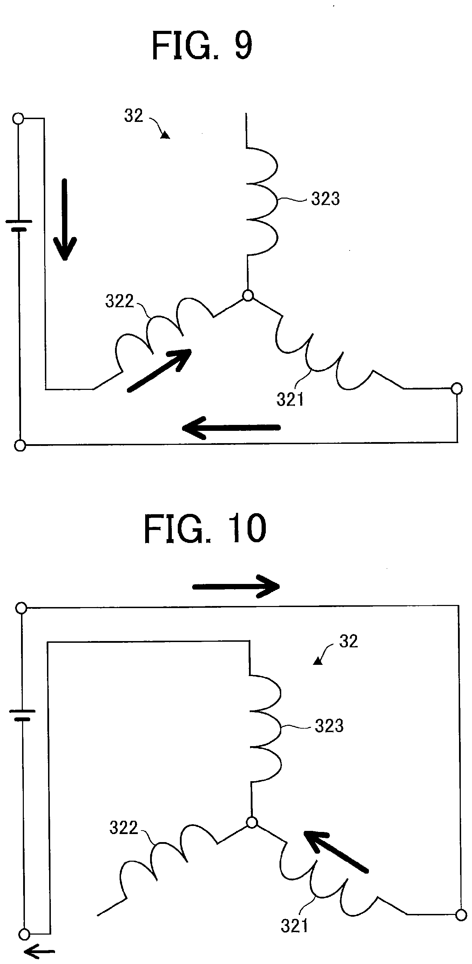

In the example illustrated in FIG. 9, the positive side of the source of electrical power is connected to the intermediate phase coil 322, and the negative side of the source of electrical power is connected to the internal phase coil 321. One end of the external phase coil 323 is an open end. The connection state illustrated in FIG. 9 will be referred to as a connection pattern P4. In this case, a large electric current flows from the source of electrical power to the intermediate phase coil 322. The electric current flowing from the source of electrical power to the intermediate phase coil 322 flows through the internal phase coil 321 and does not flow in the external phase coil 323.

In the example illustrated in FIG. 10, the positive side of the source of electrical power is connected to the internal phase coil 321, and the negative side of the source of electrical power is connected to the external phase coil 323. One end of the intermediate phase coil 322 is an open end. The connection state illustrated in FIG. 10 will be referred to as a connection pattern P5. In this case, a large electric current flows from the source of electrical power to the internal phase coil 321. The electric current flowing from the source of electrical power to the internal phase coil 321 flows through the external phase coil 323 and does not flow in the intermediate phase coil 322.

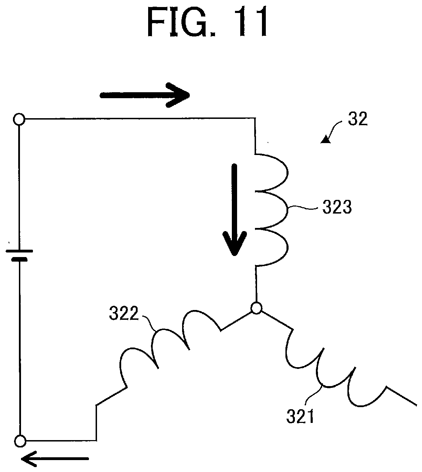

In the example illustrated in FIG. 11, the positive side of the source of electrical power is connected to the external phase coil 323, and the negative side of the source of electrical power is connected to the intermediate phase coil 322. One end of the internal phase coil 321 is an open end. The connection state illustrated in FIG. 11 will be referred to as a connection pattern P6. In this case, a large electric current flows from the source of electrical power to the external phase coil 323. The electric current flowing from the source of electrical power to the external phase coil 323 flows through the intermediate phase coil 322 and does not flow in the internal phase coil 321.

### <Method for Producing Electric Motor 1>

An example of a method for producing the stator 3 will be described.

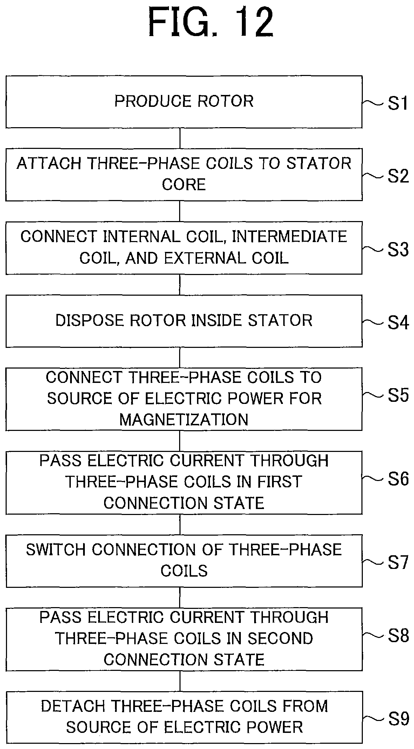

FIG. 12 is a flowchart depicting an example of a process of producing the electric motor 1.

In step S1, the rotor 2 is produced. Specifically, an unmagnetized magnetic material 22 is placed in each magnet insertion hole 211 of the rotor core 21. In step S1, the shaft 4 may be fixed to the shaft hole 212.

In step S2, the three-phase coils 32 are attached to the stator core 31. In this embodiment, the three-phase coils 32 are attached to the stator core 31 by distributed winding.

In step S3, the internal phase coil 321, the intermediate phase coil 322, and the external phase coil 323 are connected. For example, the internal phase coil 321, the intermediate phase coil 322, and the external phase coil 323 are connected by Y-connection.

It should be noted that the internal phase coil 321, the intermediate phase coil 322, and the external phase coil 323 may be connected before the three-phase coils 32 are attached to the stator core 31 by distributed winding. In this case, in step S2, the internal phase coil 321, the intermediate phase coil 322, and the external phase coil 323 connected to one another may be attached to the stator core 31 by distributed winding.

In step S4, the rotor 2 having the unmagnetized magnetic material 22 is disposed inside the stator 3 (specifically, the stator core 31).

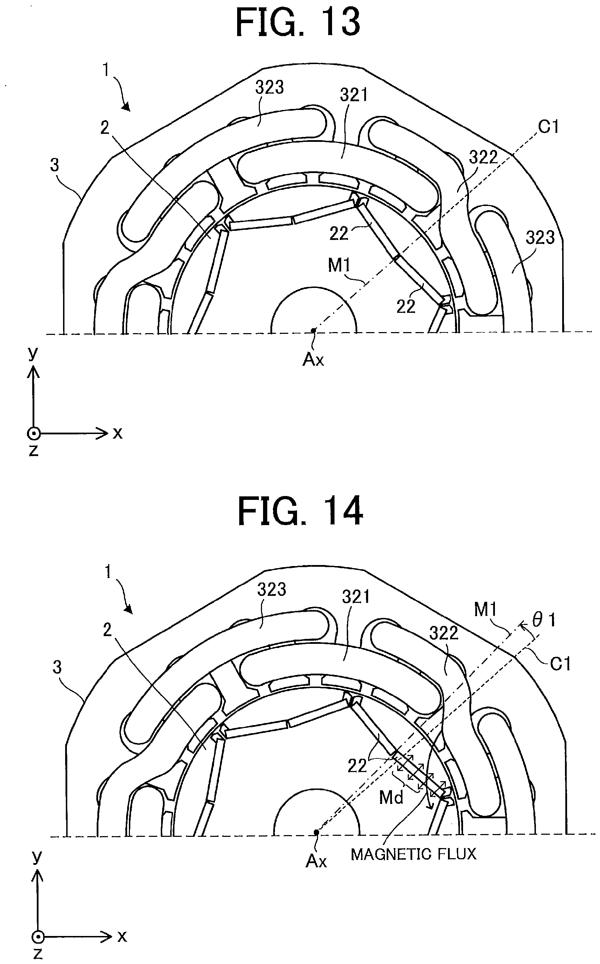

FIG. 13 is a diagram illustrating an example of a process of producing the electric motor 1.

In step S4, as illustrated FIG. 13, for example, the rotor 2 is disposed at a reference position. The reference position is a position at which the center of a magnetic pole as a magnetization target of the rotor 2 indicated by the magnetic pole center line M1 coincides with the center of the magnetic pole of the coil connected to the positive side of the source of electrical power (the first phase coil or the second phase coil in this embodiment), in the xy plane.

In the example illustrated in FIG. 13, the first phase coil is an intermediate phase coil 322. The center of the magnetic pole of the coil of each phase is the center of a magnetic pole formed when an electric current flows through the three-phase coils 32. In FIG. 13, the center of the magnetic pole of the intermediate phase coil 322 is indicated by the magnetic pole center line C1. In the xy plane, the magnetic pole center line C1 passes through the axis line Ax and the center of the magnetic pole of the first phase coil formed when an electric current flows through the three-phase coils 32. Specifically, in the example illustrated in FIG. 13, the center of the magnetic pole of the intermediate phase coil 322 is the center of the magnetic pole of the intermediate phase coil 322 formed when an electric current flows from the source of electrical power to the intermediate phase coil 322.

In step S5, the three-phase coils 32 are connected to the source of electrical power for magnetizing. In step S5, the connection state between the three-phase coils 32 and the source of electrical power is a first connection state. The first connection state is the connection state illustrated in FIG. 6, the connection state illustrated in FIG. 7, the connection state illustrated in FIG. 8, the connection state illustrated in FIG. 9, the connection state illustrated in FIG. 10, or the connection state illustrated in FIG. 11. The coil connected to the positive side of the source of electrical power in the first connection state will be referred to as a "first phase coil."

For example, in the examples illustrated in FIGS. 6 and 9, the intermediate phase coil 322 of the three-phase coils 32 is connected to the positive side of the source of electrical power. In this case, the intermediate phase coil 322 will be referred to as the "first phase coil."

In the examples illustrated in FIGS. 7 and 10, the internal phase coil 321 of the three-phase coils 32 is connected to the positive side of the source of electrical power. In this case, the internal phase coil 321 will be referred to as the "first phase coil."

In the examples illustrated in FIGS. 8 and 11, the external phase coil 323 of the three-phase coils 32 is connected to the positive side of the source of electrical power. In this case, the external phase coil 323 will be referred to as the "first phase coil."

In this embodiment, the first connection state is the connection state illustrated in FIG. 6 or 9. That is, in this embodiment, in step S5, the intermediate phase coil 322 is connected to the positive side of the source of electrical power.

The order of process steps from step S2 to step S5 is not limited to the example shown in FIG. 12 and may be changed when necessary.

FIG. 14 is a diagram illustrating an example of a process of producing the electric motor 1, specifically, a first magnetization process.

In step S6, an electric current is caused to flow in the three-phase coils 32 in a state where the center of the magnetic pole of the rotor 2 having the unmagnetized magnetic material 22 is rotated a first angle θ1 with respect to the center of the magnetic pole of the first phase coil in a first rotation direction of the rotor 2. In the example illustrated in FIG. 14, the first phase coil is the intermediate phase coil 322. That is, an electric current is caused to flow in the three-phase coils 32 in a state where the center of the magnetic pole of the rotor 2 is rotated the first angle θ1 from the reference position in the first rotation direction of the rotor 2. In other words, in the first connection state, an electric current is caused to flow from the source of electrical power to the three-phase coils 32 (specifically, the first phase coil). In this embodiment, the first rotation direction is a counterclockwise direction about the axis line Ax.

The direction of magnetic flux from the first phase coil (the intermediate phase coil 322 in FIG. 14) is preferably as parallel as possible to a magnetization facilitating direction at one end side of the magnetic material 22 as a magnetization target. Accordingly, this end side of the magnetic material 22 can be easily magnetized in the magnetization facilitating direction without using a large electric current.

Thus, the first angle θ1 is preferably an angle at which the direction of magnetic flux from the first phase coil (the intermediate phase coil 322 in FIG. 14) and the magnetization facilitating direction of the magnetic material 22 as a magnetization target form an angle near parallel. The first angle θ1 is preferably an angle at which the direction of magnetic flux from the first phase coil (the intermediate phase coil 322 in FIG. 14) is parallel to the magnetization facilitating direction of the magnetic material 22 as a magnetization target.

While the first connection state is in the connection state illustrated in FIG. 6, 7, or 8, an electric current flowing from the source of electrical power to the first phase coil is divided into an electric current flowing through the second phase coil and an electric current flowing through the third phase coil. That is, the electric current flows through the coils of the individual phases, that is, the first phase coil, the second phase coil, and the third phase coil. In this case, the first angle θ1 satisfies 0 degrees < θ1 ≤ 10 degrees, for example.

On the other hand, while the first connection state is in the connection state illustrated in FIG. 9, 10, or 11, an electric current flowing from the source of electrical power to the first phase coil flows through the second phase coil or the third phase coil and does not flow through one of the second phase coil or the third phase coil. That is, the electric current flows only through two of the three phases, and does not flow through one of the three phases. In this case, the first angle θ1 satisfies 2.5 degrees ≤ θ1 ≤ 12.5 degrees, for example.

In the first connection state, when an electric current flows from the source of electrical power to the three-phase coils 32, magnetic flux occurs from the three-phase coils 32, and the magnetic material 22 as a magnetization target is magnetized in a direction Md indicated by arrows. The direction Md is the magnetization facilitating direction of the magnetic material 22. Since the rotor 2 is in the state in which the rotor 2 is rotated the first angle θ1 with respect to the center of the magnetic pole of the first phase coil (the intermediate phase coil 322 in FIG. 14), the magnetic material 22 can be easily magnetized in the magnetization facilitating direction of the magnetic material 22. In this embodiment, the magnetization facilitating direction of the magnetic material 22 is a lateral direction of the magnetic material 22 in the xy plane.

As described above, in this embodiment, two permanent magnets 22 form one magnetic pole of the rotor 2, but one permanent magnet 22 may form one magnetic pole of the rotor 2. In this case, two magnetic materials 22 illustrated in FIG. 14 are united as one member.

In step S7, connection of the three-phase coils 32 is switched. Specifically, connection to the positive side of the source of electrical power is switched from the first phase coil to the second phase coil of the three-phase coils 32. In the state where the first phase coil is the intermediate phase coil 322, the second phase coil is the internal phase coil 321 or the external phase coil 323. Accordingly, an electrification path in the three-phase coils 32 is changed.

In step S7, the connection state between the three-phase coils 32 and the source of electrical power is a second connection state different from the first connection state. That is, in step S7, the connection state of the three-phase coils 32 is switched from the first connection state to the second connection state. The second connection state is the connection state illustrated in FIG. 6, the connection state illustrated in FIG. 7, the connection state illustrated in FIG. 8, the connection state illustrated in FIG. 9, the connection state illustrated in FIG. 10, or the connection state illustrated in FIG. 11. The coil connected to the positive side of the source of electrical power in the second connection state will be referred to as a "second phase coil."

In this embodiment, the second connection state is the connection state illustrated in FIG. 7. That is, in this embodiment, connection to the positive side of the source of electrical power is switched from the intermediate phase coil 322 to the second phase coil (the internal phase coil 321 in this embodiment) of the three-phase coils 32 (step S7).

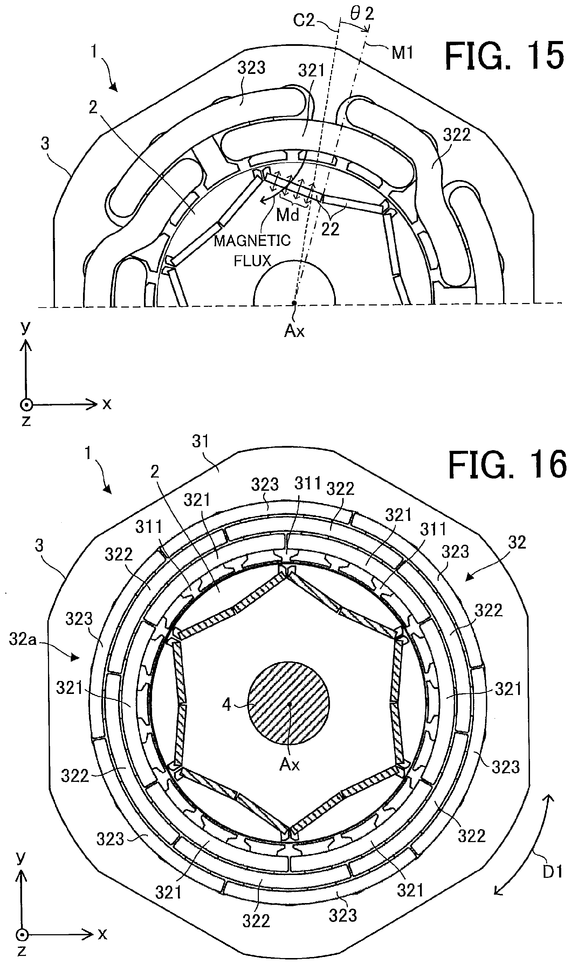

FIG. 15 is a diagram illustrating an example of a process of producing the electric motor 1, specifically, a second magnetization process.

In step S8, an electric current is caused to flow through the three-phase coils 32 in a state where the center of the magnetic pole of the rotor 2 is rotated a second angle θ2 in a second rotation direction of the rotor 2 with respect to the center of the magnetic pole of the second phase coil formed when an electric current flows from the source of electrical power to the second phase coil. In the example illustrated in FIG. 15, the second phase coil is the internal phase coil 321. The second rotation direction is an opposite direction to the first rotation direction. That is, an electric current is caused to flow through the three-phase coils 32 in a state where the center of the magnetic pole of the rotor 2 is rotated the second angle θ2 from the reference position in the second rotation direction of the rotor 2. In other words, in the second connection state, an electric current is caused to flow from the source of electrical power to the three-phase coils 32 (specifically, the second phase coil).

In the second connection state, the reference position is a position at which the center of a magnetic pole as a magnetization target of the rotor 2 indicated by the magnetic pole center line M1 coincides with the center of the magnetic pole of the second phase coil (the internal phase coil 321 in FIG. 15) .

In this embodiment, the second rotation direction is a clockwise direction about the axis line Ax. The second rotation direction may be a counterclockwise direction about the axis line Ax. In this case, the first rotation direction is a clockwise direction.

In FIG. 15, the center of the magnetic pole of the internal phase coil 321 is indicated by a magnetic pole center line C2. The magnetic pole center line C2 passes through the center of the magnetic pole of the second phase coil formed when an electric current flows through the three-phase coils 32. Specifically, in the example illustrated in FIG. 15, the center of the magnetic pole of the internal phase coil 321 is the center of the magnetic pole of the internal phase coil 321 formed when an electric current flows from the source of electrical power to the internal phase coil 321.

The direction of magnetic flux from the second phase coil (the internal phase coil 321 in FIG. 15) is preferably as parallel as possible to a magnetization facilitating direction at the other end side of the magnetic material 22 as a magnetization target. Accordingly, this end side of the magnetic material 22 can be easily magnetized in the magnetization facilitating direction without using a large electric current.

Thus, the second angle θ2 is preferably an angle at which the direction of magnetic flux from the second phase coil (the internal phase coil 321 in FIG. 15) and the magnetization facilitating direction of the magnetic material 22 as a magnetization target form an angle near parallel. The second angle θ2 is more preferably an angle at which the direction of magnetic flux from the second phase coil (the internal phase coil 321 in FIG. 15) is parallel to the magnetization facilitating direction of the magnetic material 22 as a magnetization target.

While the second connection state is in the connection state illustrated in FIG. 6, 7, or 8, an electric current flowing from the source of electrical power to the second phase coil is divided into an electric current flowing through the first phase coil and an electric current flowing through the third phase coil. That is, the electric current flows through the coils of the individual phases, that is, the first phase coil, the second phase coil, and the third phase coil. In this case, the second angle θ2 satisfies 0 degrees < θ2 ≤ 10 degrees, for example.

On the other hand, while the second connection state is in the connection state illustrated in FIG. 9, 10, or 11, an electric current flowing from the source of electrical power to the second phase coil flows through the first phase coil or the third phase coil and does not flow through one of the first phase coil or the third phase coil. That is, the electric current flows only through two of the three phases, and does not flow through one of the three phases. In this case, the second angle θ2 satisfies 2.5 degrees ≤ θ1 ≤ 12.5 degrees, for example.

In the second connection state, when an electric current flows from the source of electrical power to the three-phase coils 32, magnetic flux occurs from the three-phase coils 32, and the magnetic material 22 as a magnetization target is magnetized in the direction Md indicated by arrows. Since the rotor 2 is in the state in which the rotor 2 is rotated the second angle θ2 with respect to the center of the magnetic pole of the second phase coil (the internal phase coil 321 in FIG. 15), the magnetic material 22 can be easily magnetized in the magnetization facilitating direction of the magnetic material 22.

In step S9, the three-phase coils 32 are detached from the source of electrical power. In this manner, the electric motor 1 is obtained.

In this embodiment, the first phase coil is the intermediate phase coil 322, the second phase coil is the internal phase coil 321, and the third phase coil is the external phase coil 323, but the first phase coil is not limited to the intermediate phase coil 322, the second phase coil is not limited to the internal phase coil 321, and the third phase coil is not limited to the external phase coil 323. For example, the first phase coil may be the internal phase coil 321, the second phase coil may be the intermediate phase coil 322, and the third phase coil may be the external phase coil 323.

### <Variation>

FIG. 16 is a diagram illustrating another example of the stator 3.

In the stator 3 illustrated in FIG. 16, the number of first phase coils is equal to the number of magnetic poles of the rotor 2, the number of second phase coils is equal to the number of magnetic poles of the rotor 2, and the number of third phase coils is equal to the number of magnetic poles of the rotor 2. That is, the three-phase coils 32 include six internal phase coils 321, six intermediate phase coils 322, and six external phase coils 323.

In the stator 3 illustrated in FIG. 16, in the coil ends 32a of the three-phase coils 32, coils of each phase in the three-phase coils 32 have a ring shape. Specifically, in the coil ends 32a of the three-phase coils 32, the six internal phase coils 321 have a ring shape, the six intermediate phase coils 322 have a ring shape, and the six external phase coils 323 have a ring shape.

In the stator 3 illustrated in FIG. 16, in the coil ends 32a of the three-phase coils 32, coils of each phase in the three-phase coils 32 are concentrically arranged. Specifically, in the coil ends 32a of the three-phase coils 32, the six internal phase coils 321 are concentrically arranged, the six intermediate phase coils 322 are concentrically arranged, and the six external phase coils 323 are concentrically arranged.

In each slot 311, adjacent coils of the same phase are disposed.

For example, in the coil ends 32a of the three-phase coils 32, in the radial direction of the stator core 31, the first phase coils are located outside the second phase coils, and the third phase coils are located outside the first phase coils. In the example illustrated in FIG. 16, the first phase coils are the intermediate phase coils 322, the second phase coils are the internal phase coils 321, and the third phase coils are the external phase coil 323.

In the coil ends 32a of the three-phase coils 32, in the radial direction of the stator core 31, the second phase coils may be located outside the first phase coils, and the third phase coils may be located outside the second phase coils.

The stator 3 illustrated in FIG. 16 is applicable to the electric motor 1 described above. A method for producing the electric motor 1 including the stator 3 illustrated in FIG. 16 is the same as the method described in <Method for Producing Electric Motor 1>.

### <Advantages of Method for Producing Electric Motor 1>

Advantages of the method for producing the electric motor 1 will be described.

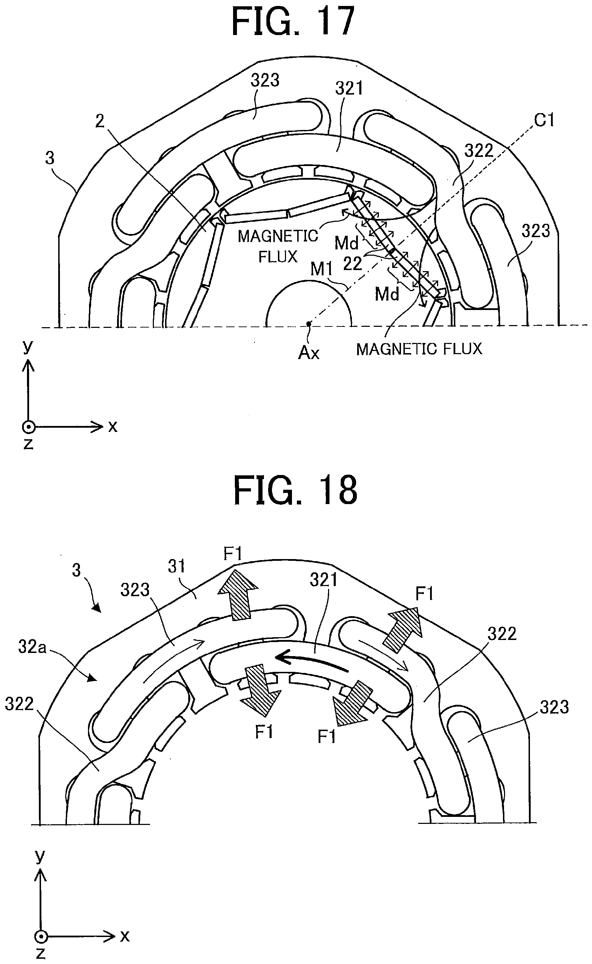

FIG. 17 is a diagram illustrating a magnetization process in an electric motor as a comparative example.

In the example illustrated in FIG. 17, in a magnetization process, an angle with respect to a reference position is zero. In this case, the direction of magnetic flux from three-phase coils (the intermediate phase coils 322 in FIG. 17) is close to a right angle with respect to a magnetization facilitating direction of a magnetic material 22 as a magnetization target. Thus, in the example illustrated in FIG. 17, it is difficult to magnetize both ends of the magnetic material 22 in the xy plane in the magnetization facilitating direction.

On the other hand, in this embodiment, magnetization is performed twice on each magnetic pole of the rotor 2. Specifically, first magnetization is performed in a state where the center of the magnetic pole of the rotor 2 is rotated the first angle θ1 with respect to the center of the magnetic pole of the first phase coil for each magnetic pole of the rotor 2. Accordingly, the magnetic material 22 can be magnetized in a state where the direction of magnetic flux from the first phase coil is as parallel as possible to the magnetization facilitating direction at one end side of the magnetic material 22 as a magnetization target. In particular, one end side of the magnetic material 22 in the xy plane is easily magnetized in the magnetization facilitating direction.

Thereafter, second magnetization is performed in a state where the center of the magnetic pole of the rotor 2 is rotated the second angle θ2 with respect to the center of the magnetic pole of the second phase coil in a second rotation direction R2 of the rotor 2 for each magnetic pole of the rotor 2. Accordingly, the magnetic material 22 can be magnetized in a state where the direction of magnetic flux from the second phase coil is as parallel as possible to the magnetization facilitating direction at the other end side of the magnetic material 22 as a magnetization target. As a result, the magnetic material 22 can be easily magnetized in the magnetization facilitating direction without using a large electric current. In particular, the other end side of the magnetic material 22 in the xy plane is easily magnetized in the magnetization facilitating direction. Accordingly, an electric current for magnetization can be reduced, as compared to the example illustrated in FIG. 17.

In addition, since the magnetic material 22 can be easily magnetized in the magnetization facilitating direction, a magnetic force of the rotor 2 can be enhanced. As a result, the highly efficient electric motor 1 can be provided.

In this embodiment, however, since magnetization is performed twice on the magnetic pole as a magnetization target of the rotor 2, a large force is generated in the three-phase coils 32, and the coil ends 32a of the three-phase coils 32 are more likely to be deformed than the example illustrated in FIG. 17.

FIG. 18 is a diagram illustrating an example of electromagnetic forces F1 in the radial direction generated in the coil ends 32a of the three-phase coils 32 when the three-phase coils 32 are energized in a process of producing the electric motor 1, specifically, the magnetization process of the magnetic material 22. In FIG. 18, arrows in the three-phase coils 32 represent directions of an electric current.

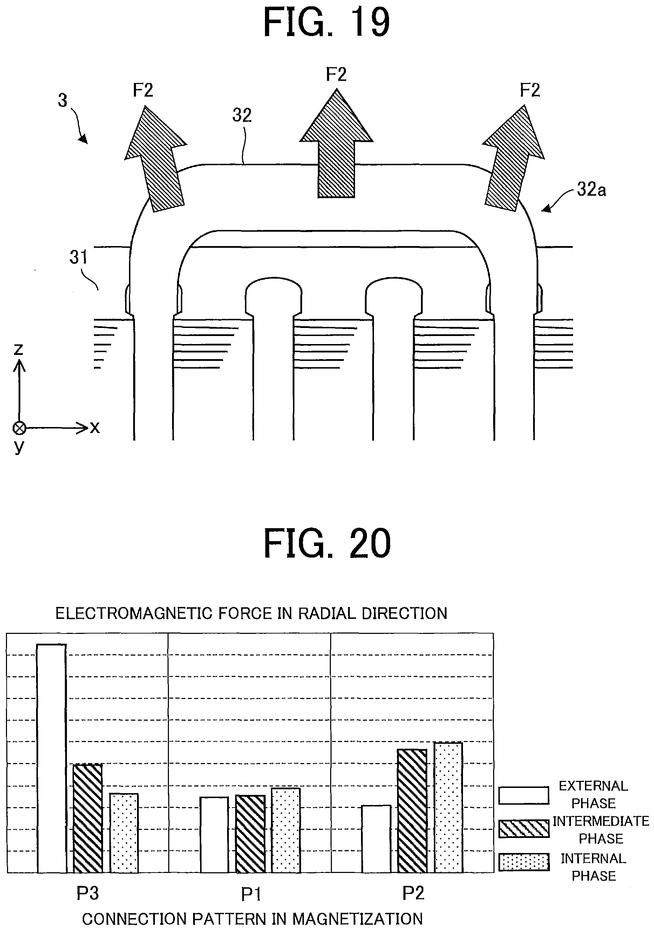

FIG. 19 is a diagram illustrating an example of electromagnetic forces F2 in the axial direction generated in the coil ends 32a of the three-phase coils 32 when the three-phase coils 32 are energized in the process of producing the electric motor 1, specifically, the magnetization process of the magnetic material 22.

In the example illustrated in FIG. 18, when an electric current flows from the source of electrical power for magnetizing to the three-phase coils 32, electromagnetic forces F1 that repel each other in the radial direction are generated between the internal phase coil 321 and the intermediate phase coil 322, and electromagnetic forces F1 that repel each other in the radial direction are generated between the internal phase coil 321 and the external phase coil 323. In addition, as illustrated in FIG. 19, electromagnetic forces F2 in the axial direction are generated in the three-phase coils 32.

FIG. 20 is a graph showing a difference in magnitude of electromagnetic forces F1 in the radial direction among connection patterns in the three-phase coils 32 when the three-phase coils 32 are energized in the magnetization process of the magnetic material 22. Data shown in FIG. 20 is an analysis result of an electromagnetic field analysis. In FIG. 20, the connection patterns P1, P2, and P3 respectively correspond to connection patterns illustrated in FIGS. 6 through 8.

In the connection pattern P3, a large electric current flows from the source of electrical power for magnetizing to the external phase coil 323, and the electric current flowing through the external phase coil 323 is larger than each of an electric current flowing through the internal phase coil 321 and an electric current flowing through the intermediate phase coil 322. In this case, as shown in FIG. 20, the electromagnetic force F1 generated in the external phase coil 323 is significantly larger than the electromagnetic forces F1 generated in the other coils. Accordingly, the external phase coil 323 is likely to be deformed in the radial direction. In this case, when the electric motor 1 is applied to a compressor, for example, the external phase coil 323 is located close to a metal part (e.g., a closed container of the compressor), and it is difficult to obtain electrical insulation of the external phase coil 323.

On the other hand, in the connection pattern P1, a large electric current flows from the source of electrical power for magnetizing to the intermediate phase coil 322, and the electric current flowing through the intermediate phase coil 322 is larger than each of an electric current flowing through the internal phase coil 321 and an electric current flowing through the external phase coil 323. In the connection pattern P1, there is no significant difference among the electromagnetic forces F1 generated in the coils of the individual phases. In particular, the electromagnetic force F1 generated in the external phase coil 323 is smaller than the electromagnetic forces F1 generated in the other coils. Accordingly, in performing magnetization with the rotor 2 disposed inside the stator 3, significant deformation of the three-phase coils 32, especially the external phase coil 323, can be prevented. In addition, since deformation of the external phase coil 323 is suppressed, electrical insulation of the external phase coil 323 can be obtained.

In the connection pattern P2, a large electric current flows from the source of electrical power for magnetizing to the internal phase coil 321, and the electric current flowing through the internal phase coil 321 is larger than each of an electric current flowing through the intermediate phase coil 322 and an electric current flowing through the external phase coil 323. In the connection pattern P1, especially the electromagnetic force F1 generated in the external phase coil 323 is smaller than the electromagnetic forces F1 generated in the other coils. Accordingly, in performing magnetization with the rotor 2 disposed inside the stator 3, significant deformation of the three-phase coils 32, especially the external phase coil 323, can be prevented. In addition, since deformation of the external phase coil 323 is suppressed, electrical insulation of the external phase coil 323 can be obtained.

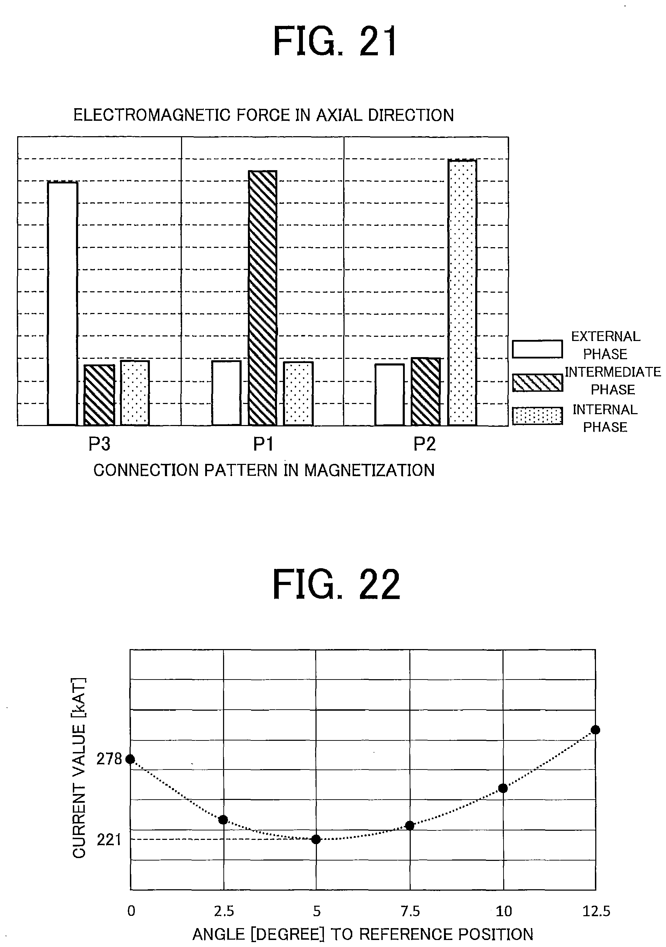

FIG. 21 is a graph showing a difference in magnitude of electromagnetic forces F2 in the axial direction among connection patterns in the three-phase coils 32 when the three-phase coils 32 are energized in the magnetization process of the magnetic material 22. In FIG. 21, the connection patterns P1, P2, and P3 respectively correspond to the connection patterns P1, P2, and P3 in FIG. 20.

As illustrated in FIG. 21, with respect to electromagnetic forces F2 in the axial direction, a large electromagnetic force F2 in the axial direction is generated in one of the three-phase coils 32 irrespective of connection pattern. Specifically, in the connection pattern P3, a large electric current flows from the source of electrical power to the external phase coil 323, and a large electromagnetic force F2 in the axial direction is generated in the external phase coil 323. In the connection pattern P1, a large electric current flows from the source of electrical power to the intermediate phase coil 322, and a large electromagnetic force F2 in the axial direction is generated in the intermediate phase coil 322. In the connection pattern P2, a large electric current flows from the source of electrical power to the internal phase coil 321, and a large electromagnetic force F2 in the axial direction is generated in the internal phase coil 321.

Regarding deformation of the three-phase coils 32 in the axial direction, influence on performance of the electric motor 1 is smaller than that in deformation of the three-phase coils 32 in the radial direction. Thus, in the magnetization process of the magnetic material 22, the first connection state is preferably the connection pattern P1 or P2, and similarly, the second connection state is preferably the connection pattern P1 or P2. That is, in a case where the first connection state is the connection pattern P1, the second connection state is the connection pattern P2. In a case where the second connection state is the connection pattern P2, the second connection state is the connection pattern P1.

Accordingly, in performing magnetization with the rotor 2 disposed inside the stator 3, significant deformation of the three-phase coils 32, especially the external phase coil 323, can be prevented. In addition, since deformation of the external phase coil 323 is suppressed, performance of the electric motor 1, such as electrical insulation of the external phase coil 323, can be obtained.

FIG. 22 is a graph showing a relationship between an angle [degree] with respect to a reference position in the connection pattern P1 or P2 and an electric current value [kAT] from the source of electrical power for magnetizing. In FIG. 22, the angle with respect to the reference position corresponds to the first angle θ1 and the second angle θ2 described above.

As shown in FIG. 22, if the angle with respect to the reference position is zero, an electric current value from the source of electrical power for magnetizing is 278 [kAT]. On the other hand, in this embodiment, if the first connection state and the second connection state is the connection pattern P1 or P2, the first angle θ1 and the second angle θ2 satisfy 0 degrees < θ1 ≤ 10 degrees, and 0 degrees < θ2 ≤ 10 degrees. Accordingly, the electric current from the source of electrical power for magnetizing can be reduced, as compared to a conventional magnetization method. The first angle θ1 and the second angle θ2 more preferably satisfy 2.5 degrees ≤ θ1 ≤ 10 degrees, and 2.5 degrees ≤ θ2 ≤ 10 degrees. The first angle θ1 more preferably satisfies 2.5 degrees ≤ θ1 ≤ 7.5 degrees or 5 degrees ≤ θ1 ≤ 10 degrees. In the example illustrated in FIG. 22, the first angle θ1 and the second angle θ2 are most preferably 5 degrees. In this case, the electric current value is reduced by about 20.5%, as compared to the conventional magnetization method.

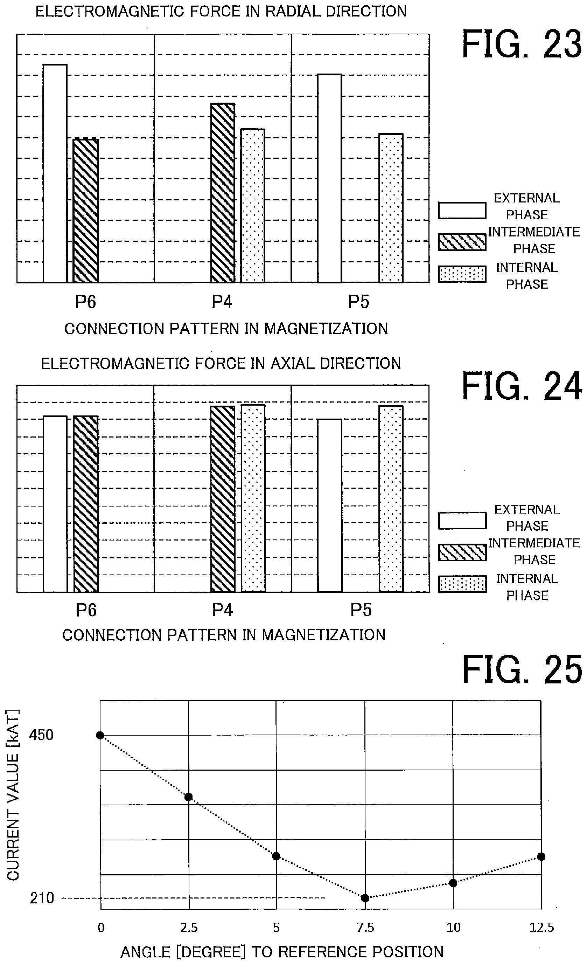

FIG. 23 is a graph showing a difference in magnitude of electromagnetic forces F1 in the radial direction among connection patterns in the three-phase coils 32 when the three-phase coils 32 are energized in the magnetization process of the magnetic material 22. Data shown in FIG. 23 is an analysis result of an electromagnetic field analysis. In FIG. 23, the connection patterns P4, P5, and P6 respectively correspond to connection patterns illustrated in FIGS. 9 through 11.

In the connection pattern P6, a large electric current flows from the source of electrical power for magnetizing to the external phase coil 323. In this case, as shown in FIG. 23, the electromagnetic force F1 generated in the external phase coil 323 is significantly larger than the electromagnetic forces F1 generated in the other coils. Accordingly, the external phase coil 323 is likely to be deformed in the radial direction. In this case, when the electric motor 1 is applied to a compressor, for example, the external phase coil 323 is located close to a metal part (e.g., a closed container of the compressor), and it is difficult to obtain electrical insulation of the external phase coil 323.

On the other hand, in the connection pattern P4, a large electric current flows from the source of electrical power for magnetizing to the intermediate phase coil 322. In the connection pattern P4, there is no significant difference among the electromagnetic forces F1 generated in the coils of the individual phases where electric currents flow. In particular, no electromagnetic force F1 is generated in the external phase coil 323. Accordingly, in performing magnetization with the rotor 2 disposed inside the stator 3, significant deformation of the three-phase coils 32, especially the external phase coil 323, can be prevented. In addition, since deformation of the external phase coil 323 is suppressed, electrical insulation of the external phase coil 323 can be obtained.

FIG. 24 is a graph showing a difference in magnitude of electromagnetic forces F2 in the axial direction among connection patterns in the three-phase coils 32 when the three-phase coils 32 are energized in the magnetization process of the magnetic material 22. In FIG. 24, the connection patterns P4, P5, and P6 respectively correspond to the connection patterns P4, P5, and P6 in FIG. 23.

As illustrated in FIG. 24, with respect to electromagnetic forces F2 in the axial direction, a large electromagnetic force F2 in the axial direction is generated in one of the three-phase coils 32 irrespective of connection pattern.

Regarding deformation of the three-phase coils 32 in the axial direction, influence on performance of the electric motor 1 is smaller than that in deformation of the three-phase coils 32 in the radial direction. Thus, in the magnetization process of the magnetic material 22, the first connection state is preferably the connection pattern P4 or P5, and similarly, the second connection state is preferably the connection pattern P4 or P5. That is, in a case where the first connection state is the connection pattern P4, the second connection state is the connection pattern P5. In a case where the second connection state is the connection pattern P5, the second connection state is the connection pattern P4.

Accordingly, in performing magnetization with the rotor 2 disposed inside the stator 3, significant deformation of the three-phase coils 32, especially the external phase coil 323, can be prevented. In addition, since deformation of the external phase coil 323 is suppressed, performance of the electric motor 1, such as electrical insulation of the external phase coil 323, can be obtained.

FIG. 25 is a graph showing a relationship between an angle [degree] with respect to the reference position in the connection pattern P4 or P5 and an electric current value [kAT] from the source of electrical power for magnetizing. In FIG. 25, the angle with respect to the reference position corresponds to the first angle θ1 and the second angle θ2 described above.

As shown in FIG. 25, if the angle with respect to the reference position is zero, an electric current value from the source of electrical power for magnetizing is 450 [kAT]. On the other hand, in this embodiment, if the first connection state and the second connection state are the connection pattern P4 or P5, the first angle θ1 and the second angle θ2 satisfy 0 degrees < θ1 ≤ 12.5 degrees, and 0 degrees < θ2 ≤ 12.5 degrees. Accordingly, the electric current from the source of electrical power for magnetizing can be reduced, as compared to a conventional magnetization method. The first angle θ1 and the second angle θ2 more preferably satisfy 2.5 degrees ≤ θ1 ≤ 12.5 degrees, and 2.5 degrees ≤ θ2 ≤ 12.5 degrees. The first angle θ1 and the second angle θ2 more preferably satisfy 5 degrees ≤ θ1 ≤ 12.5 degrees, and 5 degrees ≤ θ2 ≤ 12.5 degrees. The first angle θ1 and the second angle θ2 more preferably satisfy 5 degrees ≤ θ1 ≤ 10 degrees, and 5 degrees ≤ θ2 ≤ 10 degrees. In the example shown in FIG. 25, the first angle θ1 and the second angle θ2 are most preferably 7.5 degrees. In this case, the electric current value is reduced by 53.3%, as compared to the conventional magnetization method.

In addition, in the connection pattern P4 or P5, the electric current from the source of electrical power for magnetizing can be reduced to 210 [kAT]. Thus, in the connection pattern P4 or P5, the electric current from the source of electrical power for magnetizing can be reduced compared with the minimum value 221 [kAT] in the connection pattern P1 or P2.

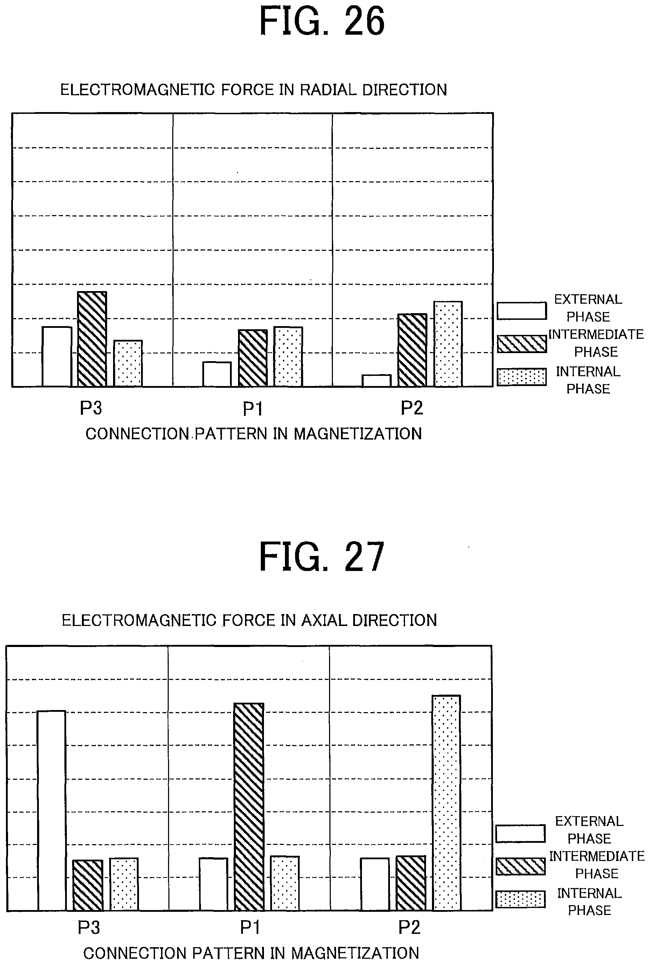

FIG. 26 is a graph showing a difference in magnitude of electromagnetic forces F1 in the radial direction among connection patterns in the three-phase coils 32 when the three-phase coils 32 are energized in a magnetization process of the magnetic material 22 according to the variation illustrated in FIG. 16. Data shown in FIG. 26 is an analysis result of an electromagnetic field analysis. In FIG. 26, the connection patterns P1, P2, and P3 respectively correspond to connection patterns illustrated in FIGS. 6 through 8.

FIG. 27 is a graph showing a difference in magnitude of electromagnetic forces F2 in the axial direction among connection patterns in the three-phase coils 32 when the three-phase coils 32 are energized in the magnetization process of the magnetic material 22 according to the variation illustrated in FIG. 16. In FIG. 27, the connection patterns P1, P2, and P3 respectively correspond to the connection patterns P1, P2, and P3 in FIG. 26.

As shown in FIGS. 26 and 27, in the magnetization process of the magnetic material 22 according to the variation illustrated in FIG. 16, the first connection state is also preferably the connection pattern P1 or P2, and similarly, the second connection state is preferably the connection pattern P1 or P2. Accordingly, in performing magnetization with the rotor 2 disposed inside the stator 3, significant deformation of the three-phase coils 32, especially the external phase coil 323, can be prevented. In addition, since deformation of the external phase coil 323 is suppressed, performance of the electric motor 1, such as electrical insulation of the external phase coil 323, can be obtained.

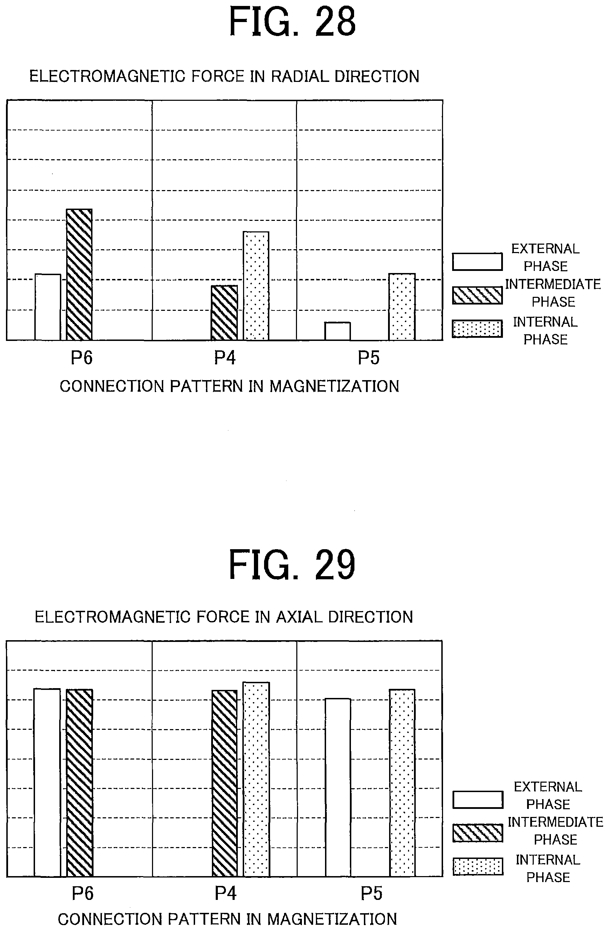

FIG. 28 is a graph showing a difference in magnitude of electromagnetic forces F1 in the radial direction among connection patterns in the three-phase coils 32 when the three-phase coils 32 are energized in the magnetization process of the magnetic material 22 according to the variation illustrated in FIG. 16. Data shown in FIG. 28 is an analysis result of an electromagnetic field analysis. In FIG. 28, the connection patterns P4, P5, and P6 respectively correspond to connection patterns illustrated in FIGS. 9 through 11.

FIG. 29 is a graph showing a difference in magnitude of electromagnetic forces F2 in the axial direction among connection patterns in the three-phase coils 32 when the three-phase coils 32 are energized in the magnetization process of the magnetic material 22 according to the variation illustrated in FIG. 16. In FIG. 29, the connection patterns P4, P5, and P6 respectively correspond to the connection patterns P4, P5, and P6 in FIG. 28.

As shown in FIGS. 28 and 29, in the magnetization process of the magnetic material 22 according to the variation illustrated in FIG. 16, the first connection state is also preferably the connection pattern P4 or P5, and similarly, the second connection state is preferably the connection pattern P4 or P5. Accordingly, in performing magnetization with the rotor 2 disposed inside the stator 3, significant deformation of the three-phase coils 32, especially the external phase coil 323, can be prevented. In addition, since deformation of the external phase coil 323 is suppressed, performance of the electric motor 1, such as electrical insulation of the external phase coil 323, can be obtained.

The variation illustrated in FIG. 16 also has characteristics shown in FIGS. 22 and 25. Thus, in the variation illustrated in FIG. 16, advantages shown in FIGS. 22 and 25 can be obtained.

As described above, in this embodiment, in performing magnetization with the rotor 2 disposed inside the stator 3, significant deformation of the three-phase coils 32, especially the external phase coil 323, can be prevented. In addition, in this embodiment, the highly efficient electric motor 1 can be provided.

### SECOND EMBODIMENT

A compressor 300 according to a second embodiment of the present invention will be described.

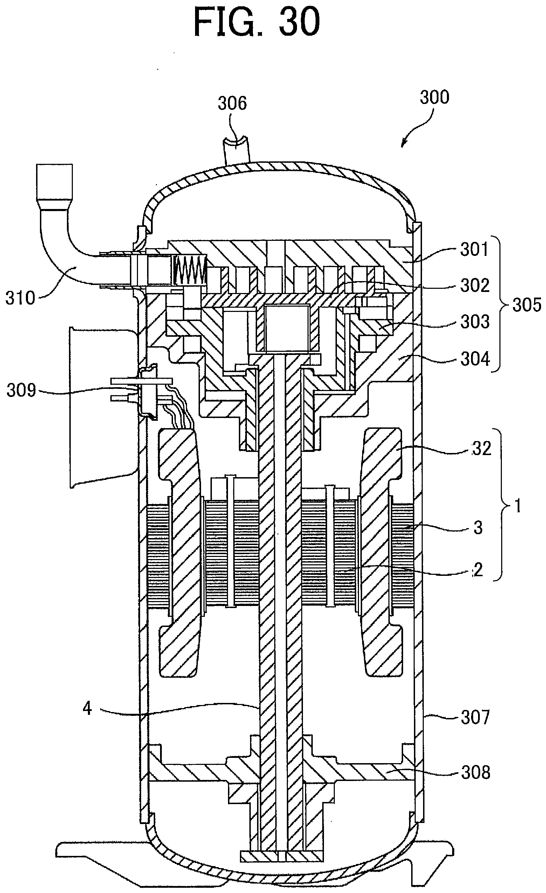

FIG. 30 is a cross-sectional view schematically illustrating a configuration of the compressor 300.

The compressor 300 includes an electric motor 1 as an electric element, a closed container 307 as a housing, and a compression mechanism 305 as a compression element (also referred to as a compression device). In this embodiment, the compressor 300 is a scroll compressor. It should be noted that the compressor 300 is not limited to the scroll compressor. The compressor 300 may be a compressor other than the scroll compressor, such as a rotary compressor.

The electric motor 1 in the compressor 300 is the electric motor 1 described in the first embodiment. The electric motor 1 drives the compression mechanism 305.

The compressor 300 also includes a subframe 308 supporting a lower end (i.e., an end opposite to the compression mechanism 305) of a shaft 4.

The compression mechanism 305 is disposed in the closed container 307. The compression mechanism 305 includes a fixed scroll 301 having a spiral part, an orbiting scroll 302 having a spiral part forming a compression chamber with the spiral part of the fixed scroll 301, a compliance frame 303 holding the upper end of the shaft 4, and a guide frame 304 fixed to the closed container 307 to hold the compliance frame 303.

A suction pipe 310 penetrating the closed container 307 is press-fitted in the fixed scroll 301. The closed container 307 is provided with a discharge pipe 306 that discharges a high-pressure refrigerant gas from the fixed scroll 301 to the outside. The discharge pipe 306 communicates with an opening provided between the compression mechanism 305 of the closed container 307 and the electric motor 1.

The electric motor 1 is fixed to the closed container 307 by fitting the stator 3 in the closed container 307. The configuration of the electric motor 1 has been described above. A glass terminal 309 for supplying electric power to the electric motor 1 is fixed to the closed container 307 by welding.

When the electric motor 1 rotates, this rotation is transferred to the orbiting scroll 302 to cause the orbiting scroll 302 to orbit. When the orbiting scroll 302 orbits, the volume of the compression chamber formed by the spiral part of the orbiting scroll 302 and the spiral part of the fixed scroll 301 varies. Thereafter, a refrigerant gas is sucked from the suction pipe 310, and is discharged from the discharge pipe 306.

The compressor 300 includes the electric motor 1 described in the first embodiment, and thus, has advantages described in the first embodiment.

In addition, since the compressor 300 includes the electric motor 1 described in the first embodiment, the highly efficient compressor 300 can be provided.

### THIRD EMBODIMENT

A refrigeration air conditioning apparatus 7 as an air conditioner including a compressor 300 according to a third embodiment of the present invention will be described.

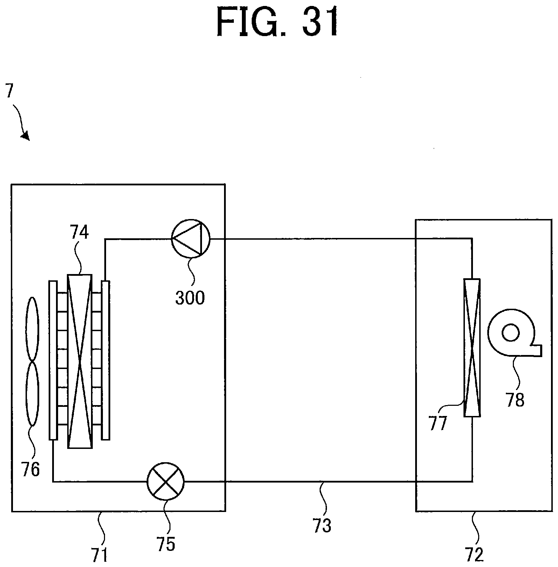

FIG. 31 is a diagram schematically illustrating a configuration of the refrigeration air conditioning apparatus 7 according to the third embodiment.

The refrigeration air conditioning apparatus 7 is capable of performing cooling and heating operations, for example. A refrigerant circuit diagram illustrated in FIG. 31 is an example of a refrigerant circuit diagram of an air conditioner capable of performing cooling and heating operations.

The refrigeration air conditioning apparatus 7 according to the third embodiment includes an outdoor unit 71, an indoor unit 72, and refrigerant piping 73 connecting the outdoor unit 71 and the indoor unit 72 to each other.

The outdoor unit 71 includes the compressor 300, a condenser 74 as a heat exchanger, a throttling device 75, and an outdoor fan 76 (first fan). The condenser 74 condenses a refrigerant compressed by the compressor 300. The throttling device 75 reduces the pressure of the refrigerant condensed by the condenser 74 to adjust a flow rate of the refrigerant. The throttling device 75 is also referred to as a pressure-reducing device.

The indoor unit 72 includes an evaporator 77 as a heat exchanger, and an indoor fan 78 (second fan). The evaporator 77 evaporates the refrigerant subjected to the pressure reduction by the throttling device 75 to cool indoor air.

A basic operation of a cooling operation by the refrigeration air conditioning apparatus 7 will be described below. In the cooling operation, a refrigerant is compressed by the compressor 300 and flows into the condenser 74. The refrigerant is condensed by the condenser 74, and the condensed refrigerant flows into the throttling device 75. The pressure of the refrigerant is reduced by the throttling device 75, and the refrigerant subjected to the pressure reduction flows into the evaporator 77. In the evaporator 77, the refrigerant evaporates, and the resulting refrigerant (specifically, a refrigerant gas) flows into the compressor 300 of the outdoor unit 71 again. When air is sent by the outdoor fan 76 to the condenser 74, heat is exchanged between the refrigerant and air. Similarly, when air is sent by the indoor fan 78 to the evaporator 77, heat is exchanged between the refrigerant and air.

The configuration and operation of the refrigeration air conditioning apparatus 7 described above are merely examples, and are not limited to the examples described above.

The refrigeration air conditioning apparatus 7 according to the third embodiment has advantages described in the first and second embodiments.

In addition, since the refrigeration air conditioning apparatus 7 according to the third embodiment includes the compressor 300 according to the second embodiment, the highly effective refrigeration air conditioning apparatus 7 can be provided.

Features of the embodiments and features of the variation described above can be combined as appropriate.

### DESCRIPTION OF REFERENCE CHARACTERS

1 electric motor, 2 rotor, 3 stator, 7 refrigeration air conditioning apparatus, 31 stator core, 32 three-phase coil, 32a coil end, 71 outdoor unit, 72 indoor unit, 211 magnet insertion hole, 300 compressor, 305 compression mechanism, 307 closed container, 74 condenser, 77 evaporator, 321 internal phase coil, 322 intermediate phase coil, 323 external phase coil.

## Claims

1. A method for producing an electric motor including a stator and a rotor having a magnetic pole, the stator having a stator core and three-phase coils attached to the stator core by distributed winding, the rotor being disposed inside the stator, the method comprising:
disposing the rotor inside the stator, the rotor having a magnetic material that is not magnetized;
connecting a first phase coil of the three-phase coils to a positive side of a source of electrical power for magnetizing;
passing an electric current through the three-phase coils in a state where a center of the magnetic pole of the rotor is rotated a first angle with respect to a center of a magnetic pole of the first phase coil in a first rotation direction of the rotor, the magnetic pole of the first phase coil being formed when the electric current flows through the first phase coil from the source of electrical power;
switching a connection with the positive side of the source of electrical power from the first phase coil to a second phase coil of the three-phase coils; and
passing an electric current through the three-phase coils in a state where the center of the magnetic pole of the rotor is rotated a second angle with respect to a center of a magnetic pole of the second phase coil in a second rotation direction, the magnetic pole of the second phase coil being formed when the electric current flows through the second phase coil from the source of electrical power, the second rotation direction being an opposite direction to the first rotation direction of the rotor.

2. The method according to claim 1, wherein
the three-phase coils include the first phase coil, the second phase coil, and a third phase coil,
in a coil end of the three-phase coils, the first phase coil, the second phase coil, and the third phase coil are arranged in this order in a circumferential direction of the stator core, and
in the coil end, the second phase coil is located closer to a center of the stator core than the third phase coil is.

3. The method according to claim 1, wherein
the three-phase coils include the first phase coil, the second phase coil, and a third phase coil,
in a coil end of the three-phase coils, the second phase coil, the first phase coil, and the third phase coil are arranged in this order in a circumferential direction of the stator core, and
in the coil end, the first phase coil is located closer to a center of the stator core than the third phase coil is.

4. The method according to any one of claims 1 to 3, wherein
the three-phase coils include the first phase coil, the second phase coil, and a third phase coil,
while the first phase coil is connected to the positive side of the source of electrical power, an electric current flowing from the source of electrical power to the first phase coil is divided into an electric current flowing through the second phase coil and an electric current flowing through the third phase coil, and
while the second phase coil is connected to the positive side of the source of electrical power, an electric current flowing from the source of electrical power to the second phase coil is divided into an electric current flowing through the first phase coil and an electric current flowing into the third phase coil.

5. The method according to claim 4, wherein
supposing θ1 is the first angle and θ2 is the second angle,
the first angle θ1 satisfies 0 degrees < θ1 ≤ 10 degrees, and
the second angle θ2 satisfies 0 degrees < θ2 ≤ 10 degrees.

6. The method according to any one of claims 1 to 3, wherein
the three-phase coils include the first phase coil, the second phase coil, and a third phase coil,
while the first phase coil is connected to the positive side of the source of electrical power, an electrical current flowing from the source of electrical power to the first phase coil flows through the second phase coil or the third phase coil and does not flow through one of the second phase coil or the third phase coil, and
while the second phase coil is connected to the positive side of the source of electrical power, an electric current flowing from the source of electrical power to the second phase coil flows through the first phase coil or the third phase coil and does not flow through one of the first phase coil or the third phase coil.

7. The method according to claim 6, wherein
supposing θ1 is the first angle and θ2 is the second angle,
the first angle θ1 satisfies 0 degrees < θ1 ≤ 12.5 degrees, and
the second angle θ2 satisfies 0 degrees < θ2 ≤ 12.5 degrees.

8. The method according to claim 1, wherein
the three-phase coils include the first phase coil, the second phase coil, and a third phase coil,
the first phase coil comprises one or more first phase coils, the number of the one or more first phase coils being equal to the number of magnetic poles of the rotor,
the second phase coil comprises one or more second phase coils, the number of the one or more second phase coils being equal to the number of magnetic poles of the rotor, and
the third phase coil comprises one or more third phase coils, the number of the one or more third phase coils is equal to the number of magnetic poles of the rotor.

9. The method according to claim 8, wherein
the one or more first phase coils comprise a plurality of first phase coils,
the one or more second phase coils comprise a plurality of second phase coils,
the one or more third phase coils comprise a plurality of third phase coils, and
in a coil end of the three-phase coils, coils of each phase in the three-phase coils are concentrically arranged.

10. The method according to claim 8 or 9, wherein in a coil end of the three-phase coils, the one or more first phase coils are located outside the one or more second phase coils and the one or more third phase coils are located outside the one or more first phase coils, in a radial direction of the stator core.

11. The method according to claim 8 or 9, wherein in a coil end of the three-phase coils, the one or more second phase coils are located outside the one or more first phase coils and the one or more third phase coils are located outside the one or more second phase coils, in a radial direction of the stator core.

12. The method according to any one of claims 1 to 11, wherein the three-phase coils are connected by Y-connection.

13. An electric motor comprising:
a stator having a stator core and three-phase coils, the three-phase coils being attached to the stator core by distributed winding; and
a rotor having a magnetic pole and disposed inside the stator, wherein
the rotor includes
a stator core, and
a permanent magnet disposed in the stator core,
in a plane orthogonal to an axial direction of the rotor, one end side of the permanent magnet is magnetized by passing an electric current through the three-phase coils in a state where a center of the magnetic pole of the rotor is rotated a first angle with respect to a center of a magnetic pole of a first phase coil of the three-phase coils in a first rotation direction of the rotor, the magnetic pole of the first phase coil being formed when the electric current flows through the first phase coil from a source of electrical power for magnetizing, and
in the plane orthogonal to the axial direction of the rotor, another end side of the permanent magnet is magnetized by passing an electric current through the three-phase coils in a state where the center of the magnetic pole of the rotor is rotated a second angle with respect to a center of a magnetic pole of a second phase coil of the three-phase coils in a second rotation direction of the rotor, the magnetic pole of the second phase coil being formed when the electric current flows through the second phase coil from the source of electrical power, the second rotation direction being an opposite direction to the first rotation direction of the rotor.

14. A compressor comprising:
a closed container;
a compression device disposed in the closed container; and
the electric motor according to claim 13 to drive the compression device.

15. An air conditioner comprising:
the compressor according to claim 14; and
a heat exchanger.
